# EUROPÄISCHE PATENTSCHRIFT

(11) **EP 0 401 627 B1**
(45) Veröffentlichungstag und Bekanntmachung des Hinweises auf die Patenterteilung: **22.06.1994**
(21) Anmeldenummer: 90110030.5
(22) Anmeldetag: 26.05.1990
(51) Int. Cl.: C08F 220/10, C08F 222/40, C08F 8/32, C08F 8/16

(54) **Hydroxyfunktionelle Copolymerisate, Verfahren zu ihrer Herstellung und ihre Verwendung als Bindemittel oder Bindemittelkomponente**
Copolymers with hydroxy groups, process for their preparation and their usage as binder
Copolymères avec des groupes hydroxy, leur procédé de préparation et leur usage comme liant

(30) Priorität: 07.06.1989 DE 3918528
(43) Veröffentlichungstag der Anmeldung: 12.12.1990
(73) Patentinhaber: BAYER AG, 51368 Leverkusen (DE)
(72) Erfinder: Blum, Harald, Dr., D-4175 Wachtendonk (DE); Pedain, Josef, Dr., D-5000 Köln 80 (DE); Höhlein, Peter, Dr., D-4152 Kempen 3 (DE); Wamprecht, Christian, Dr., D-4040 Neuss 22 (DE)

(56) Entgegenhaltungen:
- EP-A- 0 112 195
- GB-A- 1 054 370
- US-A- 3 998 994
- CHEMICAL ABSTRACTS, vol. 108, no. 22, Mai 1988, Columbus, Ohio, US;abstract no. 187483Y, H. FRIEDRICH: 'AQUEOUS SOLUTIONS OF POLYMERS BEARINGCARBOXYL AND HYDROXYL GROUPS' Seite 14 ;Spalte 1 ;& DD-A-247456
- CHEMICAL ABSTRACTS, vol. 100, no. 24, Juni 1984, Columbus, Ohio, US;abstract no. 192590V, M. NICHIFOR: 'WATER-SOLUBLE AMPHOTERIC POLYMERS' Seite 21;Spalte 1 ;
- PATENT ABSTRACTS OF JAPAN vol. 12, no. 176 (C-498)(3023)25. Mai 1988 & JP-A-62 283 108

## Beschreibung

Die vorliegende Erfindung betrifft neue hydroxyfunktionelle Copolymerisate mit Imidstruktureinheiten, Verfahren zur Herstellung solcher Copolymere und deren Verwendung.

Copolymerisate von Acryl- und Vinylmonomeren zeichnen sich durch eine Reihe hervorragender Eigenschaften aus wie z.B. Hydrolyse- und Witterungsbeständigkeit, Vergilbungsresistenz und Glanzhaltung. Durch Einbau funktioneller Gruppen wie z.B. Hydroxygruppen, erhält man lacktechnisch wertvolle reaktive Substanzen, die in großen Mengen für Lacke, Beschichtungen, Klebstoffe, Druckfarben und Dichtmassen eingesetzt werden. Zur Einführung von Hydroxygruppen werden üblicherweise hydroxyfunktionelle Monomere wie z.B. Hydroxyethylmethacrylat copolymerisiert. Zur Erzielung von hohen Vernetzungsdichten müssen relativ große Mengen hydroxyfunktioneller Monomere eingebaut werden, wodurch die Variationsbreite der übrigen Monomeren eingeschränkt und außerdem relativ teure Produkte erhalten werden.

Polyimide können z.B. aus Bisanhydriden wie Pyromellithsäurebisanhydrid und aus Diaminen hergestellt werden. Sie zeichnen sich unter anderem durch hervorragende elektrische Isoliereigenschaften und hohe Thermostabilität bei Dauerbelastung aus. Ein gravierender Nachteil ist ihre schlechte Löslichkeit. Es sind große Mengen an physiologisch nicht unbedenklichen Lösemitteln wie z.B. Dimethylacetamid erforderlich.

In der DE-OS 1 745 954 wird ein Verfahren zur Herstellung von Ethanolimidderivaten aus Styrol-Maleinsäureanhydrid-Cotelomeren mit mittlerem Molekulargewicht Mn von 650 bis 1600 beschrieben. Das Verfahren führt zunächst zu vernetzten, gelartigen Produkten, die erst beim Erhitzen auf 150 bis 250°C in niedermolekulare Ethanolimidprodukte übergehen. Ein solches Verfahren ist im technischen Maßstab kaum beherrschbar und darüber hinaus unwirtschaftlich, da ein bis zu 10-facher Überschuß an Ethanolamin eingesetzt werden muß, außerdem sind Polymere mit höheren Molekulargewichten nach diesem Verfahren nicht herstellbar.

Die nach diesem Verfahren erhaltenen Cotelomeren sind aufgrund ihrer fixierten chemischen Zusammensetzung und ihres sehr niedrigen Molekulargewichts für höherwertige Bindemittel in Lacken, Klebstoffen, Beschichtungen, Dichtmassen und Druckfarben nicht geeignet. Darüber hinaus sind sie nur in ungebräuchlichen Lösemitteln, wie z.B. Chloroform, Methylenchlorid oder Methanol, vollkommen löslich.

Es war die der Erfindung zugrundeliegende Aufgabe, neue Bindemittel bzw. Bindemittelkomponenten für Lacke, Beschichtungen, Dichtmassen, Klebstoffe oder Druckfarben zur Verfügung zu stellen, die die Vorteile der Copolymerisate und Polyimide des genannten Standes der Technik in sich vereinen, ohne mit deren Nachteilen behaftet zu sein. Diese Aufgabe konnte mit der Bereitstellung der nachstehend näher beschriebenen hydroxyfunktionellen, Imidstruktureinheiten aufweisenden Copolymerisate bzw. des Verfahrens zu ihrer Herstellung gelöst werden.

Die nachstehend näher beschriebenen erfindungsgemäßen Copolymerisate sind einfach herstellbar, in gebräuchlichen Lacklösungsmitteln löslich und aufgrund ihres Molekulargewichts sowie einer innerhalb weiter Grenzen variablen Zusammensetzung für vielfältige Anwendungsbereiche geeignet. Ihre leichte Herstellbarkeit beruht auf dem überraschenden Befund, daß die speziellen, als Zwischenprodukte verwendeten anhydridfunktionellen Copolymerisate durch Reaktion mit geeigneten Aminoalkoholen zu unvernetzten, gut löslichen hydroxyfunktionellen, Imidstruktureinheiten aufweisenden Copolymerisaten modifiziert werden können. Dies ist überraschend, da bekannt ist, daß organische Polyanhydride mit Aminoalkoholen zu vernetzten, unlöslichen Produkten abreagieren (EP-A-48 128 (US 4 452 948), DE-OS 1 769 466 (US 3 878 151), DE-OS 2 214 450, DE-OS 2 405 981, US 4 155 957, DE-OS 2 214 451).

Die EP-A-0 112 195 beschreibt zwar bereits Umsetzungsprodukte von Säureanhydridgruppen aufweisenden Copolymerisaten mit Aminoalkoholen, jedoch handelt es sich bei den Copolymerisaten um spezielle Polymere, die 20 bis 40 Gew.-% an linearen Olefinen mit vorzugsweise mindestens 16 Kohlenstoffatomen einpolymerisiert enthalten müssen, so daß die Produkte dieser Vorveröffentlichung als Mineralöl-Additiv einsetzbar sind. Die Herstellung von hydroxyfunktionellen Copolymerisaten der erfindungsgemäßen, nachstehend näher beschriebenen Art wird in der Vorveröffentlichung ebensowenig angesprochen, wie ihre Verwendbarkeit als Bindemittel bzw. Bindemittelkomponente für Lacke, Beschichtungen, Dichtmassen, Klebstoffe oder Druckfarben.

Gegenstand der Erfindung sind hydroxyfunktionelle Copolymerisate mit einer unter 25 liegenden Säurezahl des Molekulargewichtsbereichs Mₙ 2000 bis 30 000, dadurch gekennzeichnet, daß sie
a) 1 bis 70 Gew.-% an Struktureinheiten der Formel I 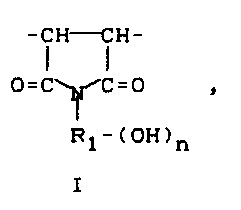
b) 1 bis 75 Gew.-% an Struktureinheiten der Formel II 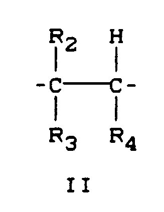 und
c) 15 bis 98 Gew.-% an Struktureinheiten der Formel III 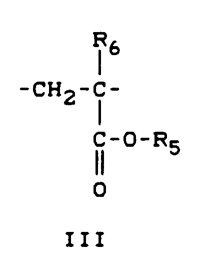
d) 0 bis 15, vorzugsweise 0 bis 5 Gew.-% an anderen, von eingebauten mehrfunktionellen Monomeren herrührenden Struktureinheiten
   einpolymerisiert enthalten, wobei sich die genannten Prozentsätze zu 100 ergänzen und wobei
   - n: für eine ganze Zahl von 1 bis 5 steht,
   - R₁: für einen (n+1)-wertigen Kohlenwasserstoffrest mit insgesamt 2 bis 20 Kohlenstoffatomen steht, der Sauerstoff und/oder Stickstoff in Form von in der Kette eingebauten oder seitenständig als Substituenten vorliegenden Ether-, Ester-, Amid-, tert.-Amin-, Urethan-, Keto-, Nitril- oder Nitrogruppen aufweisen und/oder Halogenatome als Substituenten enthalten kann,
   - R₂: für Wasserstoff, eine Methyl- oder Ethylgruppe oder für Chlor oder Fluor steht,
   - R₃: für einen aromatischen Kohlenwasserstoffrest mit 6 bis 12 Kohlenstoffatomen, Chlor, Fluor, eine Nitrilgruppe oder einen Sauerstoff und/oder Stickstoff in Form von Ether-, Ester-, Amid-, Urethan- oder Ketogruppen enthaltenden aliphatischen Kohlenwasserstoffrest mit 2 bis 18 Kohlenstoffatomen steht,
   - R₄: für Wasserstoff steht oder zusammen mit R₃ und den beiden Kohlenstoffatomen einen cycloaliphatischen Kohlenwasserstoffring mit 5 oder 6 Kohlenstoffatomen bildet,
   - R₅: für einen aliphatischen oder cycloaliphatischen, gegebenenfalls Sauerstoff oder Stickstoff als Heteroatome enthaltenden Kohlenwasserstoffrest mit 1 bis 18 Kohlenstoffatomen steht, und
   - R₆: für Wasserstoff oder eine Methylgruppe steht.

Gegenstand der Erfindung ist auch ein Verfahren zur Herstellung dieser hydroxyfunktionellen Copolymerisate, welches dadurch gekennzeichnet ist, daß man den hydroxyfunktionellen Copolymerisaten entsprechende anhydridfunktionelle Copolymerisate mit Aminoalkoholen der allgemeinen Formel IV

H₂N-R₁-(OH)ₙ IV

für welche
- n und R₁: die obengenannte Bedeutung haben,
unter Einhaltung eines Äquivalentverhältnisses von Aminogruppen zu Säureanhydridgruppen von mindestens 1:1 unter Imidbildung bei 100 bis 200°C zur Reaktion bringt und gleichzeitig und/oder anschließend das Reaktionswasser azeotrop abdestilliert.

Gegenstand der Erfindung ist auch die Verwendung dieser hydroxyfunktionellen Copolymerisate als Bindemittel oder Bindemittelkomponente in Lacken, Beschichtungen, Dichtmassen, Klebstoffen oder Druckfarben.

Besonders bevorzugte, erfindungsgemäße hydroxyfunktionelle Copolymerisate sind solche, die die genannten Struktureinheiten I bis III in den oben angegebenen Mengen aufweisen, wobei
- n: für eine ganze Zahl von 1 bis 3, insbesondere 1 oder 2, steht,
- R₁: für einen aliphatischen, gegebenenfalls Estergruppen aufweisenden Kohlenwasserstoffrest mit insgesamt 2 bis 13, insbesondere 2 bis 4 Kohlenstoffatomen steht,
- R₂: für Wasserstoff, eine Methyl- oder Ethylgruppe oder für Chlor steht,
- R₃: für einen Phenylrest steht,
- R₄: für Wasserstoff steht,
- R₅: für einen aliphatischen Kohlenwasserstoffrest mit 1 bis 18 Kohlenstoffatomen steht und
- R₆: für Wasserstoff oder eine Methylgruppe steht.

Die besonders bevorzugten erfindungsgemäßen, hydroxyfunktionellen Copolymerisate weisen pro 100 Gewichtsteilen
a) 5 bis 55, insbesondere 10 bis 45 Gew.-Teile an Struktureinheiten der Formel I,
b) 3 bis 60, insbesondere 5 bis 50 Gew.-Teile an Struktureinheiten II und
c) 25 bis 85, insbesondere 30 bis 75 Gew.-Teile an Struktureinheiten III auf,
wobei sich die genannten Gewichtsteile jeweils zu 100 ergänzen.

Die Herstellung der erfindungsgemäßen, hydroxyfunktionellen Copolymerisate erfolgt durch Umsetzung der ihnen entsprechenden anhydridfunktionellen Copolymerisate mit Aminoalkoholen der allgemeinen Formel

H₂N-R₁-(OH)ₙ IV

wie nachstehend noch im einzelnen ausgeführt werden wird. Gemäß einer weiteren Ausbildung dieses Verfahrens werden die hierbei erhaltenen hydroxyfunktionellen Copolymerisate mit Lactonen unter ringöffnender Esterbildung weiter modifiziert.

Die anhydridfunktionellen Copolymerisate, die beim erfindungsgemäßen Verfahren als Ausgangsmaterialien eingesetzt werden, sind in an sich bekannter Weise hergestellte Copolymerisate von, bezogen auf insgesamt 100 Gewichtsteile Monomerer,
a′) 1 bis 50, bevorzugt 5 bis 40, besonders bevorzugt 10 bis 25 Gewichtsteilen anhydridfunktioneller Monomerer,
b′) 1 bis 75, bevorzugt 3 bis 60, besonders bevorzugt 5 bis 50 Gewichtsteilen Monomere der Formel V 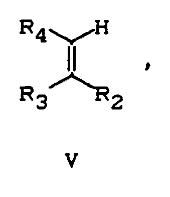
c′) 15 bis 98, bevorzugt 25 bis 85, besonders bevorzugt 30 bis 75 Gewichtsteilen Monomere der Formel VI 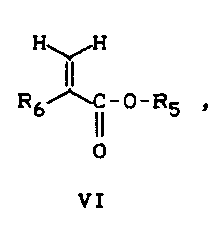
d′) 0 bis 15, bevorzugt 0 bis 5 Gewichtsteile mehrfachfunktionelle Substanzen, die 2 oder mehr copolymerisierbare, ungesättigte Bindungen enthalten.

Geeignete bzw. bevorzugte Monomere a') sind Maleinsäureanhydrid, Itaconsäureanhydrid, Citraconsäureanhydrid, wobei Maleinsäureanhydrid besonders bevorzugt ist.

Geeignete bzw. bevorzugte Monomere b') sind z.B. Styrol, Vinyltoluol, α-Methylstyrol, α-Ethylstyrol, kernsubstituierte, gegebenenfalls Isomerengemische darstellende Diethylstyrole, Isopropylstyrole, Butylstyrole und Methoxystyrole, Ethylvinylether, n-Propylvinylether, Isopropylvinylether, n-Butylvinylether, Isobutylvinylether, Vinylacetat, Vinylpropionat, Vinylbutyrat und beliebige Gemische dieser Monomeren.

Geeignete bzw. bevorzugte Monomere c') sind z.B. Methylacrylat, Methylmethacrylat, Ethylacrylat, Ethylmethacrylat, n-Butylacrylat, n-Butylmethacrylat, iso-Butylacrylat, iso-Butylmethacrylat, tert.-Butylacrylat, tert.-Butylmethacrylat, 2-Ethylhexylacrylat, 2-Ethylhexylmethacrylat, Octylacrylat, Octylmethacrylat, Laurylacrylat, Laurylmethacrylat, Dodecylacrylat, Dodecylmethacrylat, Cyclohexylacrylat, Benzylmethacrylat, Benzylacrylat, 4-tert.-Butylcyclohexylacrylat, 4-tert.-Butylcyclohexylmethacrylat, 2-Cyclohexylpropyl-1-methacrylat, 3-Methoxybutylacrylat, 3-Methoxybutylmethacrylat, 2-Phenylethylacrylat, 2-Phenylethylmethacrylat, 2,2,3,3-Tetrafluorpropylmethacrylat, Tetrahydrofurfuryl-2-acrylat, Tetrahydrofurfuryl-2-methacrylat und beliebige Gemische dieser Monomeren.

Geeignete bzw. bevorzugt Monomere d′ ) sind z.B. Hexandiolbisacrylsäureester, Trimethylolpropantrisacrylsäureester, Pentaerythrittrisacrylsäureester, Neopentylglykolbisacrylsäureester, Divinylbenzol.

Die anhydridfunktionellen Copolymerisate weisen im allgemeinen ein als Zahlenmittel bestimmtes, nach der Gelpermeationschromatographie mittels geeichter Polystyrole ermittelbares Molekulargewicht Mn von ca. 1800 bis 28 000, vorzugsweise von 2000 bis 15 000 und ganz besonders bevorzugt von 2600 bis 7500 auf. Ihr Anhydridäquivalentgewicht (= Menge in "g", die 1 Mol Anhydridgruppen enthält) liegt bei 196 bis 9800, vorzugsweise bei 245 bis 1960 und besonders bevorzugt bei 392 bis 980.

Sie werden in an sich bekannter Weise durch eine radikalisch initiierte Copolymerisation, vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Geeignet sind beispielsweise Ester wie Propylacetat, Butylacetat, Isobutylacetat, sec.-Butylacetat, Amylacetat, Hexylacetat, Benzylacetat, Ethylpropionat, Butylpropionat, Isobutylisobutyrat, Ethoxypropylacetat, Propylenglykolmethyletheracetat, Oxohexylacetat (®Exxate 600), Oxoheptylacetat (®Exxate 700), z.B. Ether wie Diisopropylether, Dibutylether, Dioxan, Dimethyldiglykol, Kohlenwasserstoffe wie Benzin, Terpentinöl, Solventnaphta, Terpene, Hexan, Heptan, Octan, Cyclohexan, Toluol, Xylol, Ethylbenzol, Ketone wie Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger Lösemittel.

Bevorzugt sind solche Lösemittel, deren Siedepunkt bei Normalbedingungen ≧110°C beträgt und solche Lösemittel, die mit Wasser ein Azeotrop bilden wie z.B. Xylol, Butylacetat, Solventnaphta, Oxohexylacetat.

Die Copolymerisation wird üblicherweise bei Festgehalen von 30 bis 95 Gew.-% und unter Inertgas wie z.B. N₂ durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 %, bevorzugt mehr als 99 % beendet.

Gegebenenfalls ist es erforderlich durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, daß nach der Polymerisation größere Mengen an Restmonomeren im Copolymerisat enthalten sind. Aus Kostengründen und für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator zu reduzieren.

Es ist auch möglich, einen Teil der anhydridfunktionellen Monomeren mit dem Lösungsmittel vorzulegen, oder das anhydridfunktionelle Monomer schneller als die anderen Monomeren zuzudosieren. Diese geänderten Herstellverfahren können in gewissen Fällen die Verträglichkeit bzw. andere Eigenschaften der Bindemittel verbessern.

Der Monomerenumsatz wird durch eine Bestimmung des Festgehaltes der Reaktionsmischung ermittelt und durch eine gaschromatographische Restmonomeranalyse überprüft.

Vorzugsweise werden solche Radikalbildner eingesetzt, die für Reaktionstemperaturen von 60 bis 180°C geeignet sind, wie organische Peroxide, z.B.: Dibenzoylperoxid, Di-tert.-butylperoxid, Dilaurylperoxid, tert.-Butylperoctoat, tert.-Butylperoxymaleinat, tert.-Butylperoxybenzoat, Dicumylperoxid, Didecanoylperoxid, wie Azoverbindungen, z.B. 2,2′-Azobis-(2,4-dimethylvaleronitril), 2,2′-Azobis-(isobutyronitril), 2,2′-Azobis-(2,3-dimethylbutyronitril), 1,1′-Azobis-(1-cyclohexannitril).

Die Initiatoren können in Mengen von 0,5 bis 10 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan usw. in Mengen von 0 bis 10 Gew.-% eingesetzt werden.

Zur Durchführung des erfindungsgemäßen Verfahrens werden die in den Copolymerisaten vorliegenden Anhydridgruppen in Imidgruppen überführt. Dies geschieht vorzugsweise in 10 bis 80 %iger organischer Lösung durch Umsetzung mit Aminoalkoholen der allgemeinen Formel VI

H₂N-R₁-(OH)ₙ , IV

worin
- R₁ und n: die oben angeführte Bedeutung haben.

Die eingesetzten Aminoalkohole weisen ein berechnetes Molekulargewicht von mindestens 61 und vorzugsweise 75 bis 300 auf und enthalten neben einer primären Aminogruppe mindestens eine, höchstens jedoch 5, vorzugsweise 1 bis 3 und insbesondere 1 bis 2 Hydroxylgruppen.

Geeignete Aminoalkohole sind z.B. 2-Aminoethanol, 1-Aminoethanol, 3-Amino-1-propanol, 2-Amino-1-propanol, 1-Amino-2-propanol, 2-Amino-2-methyl-1-propanol, 2-Amino-2-methyl-1,3-propandiol, 2-Amino-2-hydroxy-methyl-1,3-propandiol, 2-(2-Aminoethoxy)-ethanol, 2-Amino-1-butanol, 4-Amino-1-butanol, 3-Amino-1-butanol, 2-Amino-1-cyclohexanol, 3-Amino-1-cyclohexanol, 4-Amino-1-cyclohexanol, 2-Amino-1-(hydroxymethyl)-cyclopentan, Galactosamin, 2-Amino-1-hexanol, 6-Amino-1-hexanol, 2-Amino-1-phenylethanol, 2-Amino-3-methyl-1-butanol, 1-(Aminomethyl)-cyclohexanol, Noradrenalin, 6-Amino-2-methyl-2-heptanol, Norphenylephedrin, Norpseudoephedrin, 2-Amino-3-methyl-1-pentanol, 2-Amino-4-methyl-1-pentanol, (5-Hydroxy-1,3,3-trimethyl-1-cyclohexylmethyl)-amin, 2-(Aminomethyl)-3,3,5-trimethylcyclopentanol, 2-Amino-1-pentanol, 5-Amino-1-pentanol, 2-Amino-2-phenylethanol, 2-Amino-1-phenyl-1,3-propandiol, 2-Amino-1-phenyl-propanol-1, 2-Amino-3-phenyl-propanol-1, 1-Amino-2,3-propandiol, 2-Amino-1,3-propandiol, 3,4-Dihydroxynorephedrin, 4-Aminophenol, 2-(4-Aminophenoxy)-ethanol, 4-Aminobenzylalkohol, 3-Aminobenzylalkohol, 2-Aminobenzylalkohol, 2-Amino-9-fluorenol, 1-Amino-4-(2-hydroxyethyl)-piperazin, 2-Amino-3-hydroxypyridin, 2-Amino-1-(4-hydroxy-3-methoxyphenyl)-ethanol, 1-Amino-2-naphthol, 1-Amino-4-naphthol, 1-Amino-7-naphthol, 2-Amino-3-naphthol, 2-Amino-1-(4-nitrophenyl)-1,3-propandiol, 1-(3-Aminophenyl)-ethanol, 2-(2-Aminophenyl)-ethanol, 2-(4-Aminophenyl)-ethanol, 2-((3-Aminopropyl)-methylamino)-ethanol, 2-(4-Aminophenoxy)-ethanol, 4-Amino-2,6-dichlorphenol, 2-Amino-4-chlor-6-nitrophenol, 1-Amino-4-hydroxyantghrachinon, 4-Amino-2-hydroxybenzoesäurephenylester, 4-Amino-3-hydroxy-buttersäureethylester, 5-[(3-Aminobenzoyl)-amino]-2-hydroxybenzoesäuremethylester. Prinzipiell geeignete Aminoalkohole sind auch Umsetzungsprodukte aus 1 Äquivalent Hydrazin und 1 Äquivalent Ethylencarbonat oder Propylencarbonat. Struktureinheiten I aufweisende erfindungsgemäße Copolymerisate, die im Rest R₁ Heteroatome der obengenannten Art aufweisen, werden durch Verwendung entsprechender Aminoalkohole IV erhalten.

Die besonders bevorzugten Aminoalkohole weisen eine primäre Aminogruppe, 1 bis 2 Hydroxylgruppen und 2 bis 4 Kohlenstoffatome auf. Besonders gut geeignete Aminoalkohole sind beispielsweise 2-Amino-1-ethanol, 2- oder 3-Amino-1-propanol, 1-Amino-2-propanol, die isomeren Aminobutanole oder die isomeren Aminopropandiole.

Zur Durchführung des erfindungsgemäßen Verfahren werden die anhydridfunktionellen Copolymerisate und die Aminoalkohole in solchen Mengen eingesetzt, daß auf jede Anhydridgruppe 1,0 bis 2,0, bevorzugt 1,0 bis 1,5 und besonders bevorzugt 1,0 bis 1,2 Äquivalente Aminoalkohol entfallen.

Geeignete Lösemittel für die Imidierungsreaktion sind z.B. die bei der Herstellung der anhydridfunktionellen Copolymerisate bevorzugt verwendeten Lösemittel.

Bei dem erfindungsgemäßen Verfahren wird die Aminoalkohol-Komponente, die auch aus einem Gemisch von mehreren unterschiedlichen Aminoalkoholen der genannten Art bestehen kann, gegebenenfalls zusammen mit geeignete Lösemitteln vorgelegt, auf Temperaturen ≧100°C erhitzt und dann bei Temperaturen von 100 bis 200°C, bevorzugt bei 120 bis 148°C das gelöste anhydridfunktionelle Copolymerisat zudosiert. Dabei kann die Reaktionsführung so gewählt werden, daß parallel zur Zugabe des Polymerisats das Reaktionswasser am Wasserabscheider azeotrop abdestilliert wird. Nach einer Verfahrensvariante kann auch zunächst die ganze Menge anhydridfunktionelles Copolymerisat zugegeben und im Anschluß daran das Reaktionswasser abgespalten und, vorzugsweise azeotrop, abdestilliert werden.

Die Wasserabspaltung wird bei 100 bis 200°C, bevorzugt bei 120 bis 148°C so lange durchgeführt, bis entweder die theoretische Wassermenge abgespalten ist, oder kein Wasser mehr abgespalten wird. Die Wasserabspaltung kann z.B. durch einen Inertgasstrom, der entweder durch die Reaktionsmischung geleitet oder übergeleitet wird, beschleunigt werden. Die Imidierungsreaktion wird so lange durchgeführt, bis die Endprodukte Säurezahlen ≦25, bevorzugt ≦15 und besonders bevorzugt ≦10 aufweisen (jeweils bezogen auf 100 %iges Polymer).

Um besonders niedrige Säurezahlen zu erhalten, kann es unter bestimmten Bedingungen angebracht sein, gegen Reaktionsende nochmals geringe Mengen, etwa 0,05 bis 0,2 Äquivalente Aminoalkohol zuzusetzen, um zum Beispiel Verluste durch azeotrope Destillation zu ersetzen.

Die Molekulargewichte Mn der hydroxyfunktionellen Polyimidcopolymerisate entsprechen in etwa den durch Gelpermeationschromatographie ermittelten Molekulargewichten Mn der anhydridfunktionellen Copolymerisate, erhöht um das berechnete Molekulargewicht der eingesetzten Aminoalkohole, abzüglich der abgespaltenen Wassermenge.

Beim Vermischen von anhydridfunktionellen Copolymerisaten und Aminoalkoholen können in Abhängigkeit von den Reaktionsbedingungen hochviskose Zwischenprodukte entstehen, insbesondere dann, wenn anhydridfunktionelle Copolymerisate mit hohem Molekulargewicht und/oder hohem Anhydridäquivalentgewicht eingesetzt werden. In diesen Fällen kann es angebracht sein, die Konzentration der Reaktionsprodukte in niedrigem Bereich zu halten. Im Verlaufe der Umsetzung fällt die Viskosität solcher Produkte jedoch wieder auf niedrigeres Niveau ab. Die Produkte bleiben dabei stets rührfähig.

Bei bestimmten Copolymerisaten und der Verwendung eines Überschusses an Aminoalkohol, kann auch das anhydridfunktionelle Polymerisat vorgelegt und der Aminoalkohol zudosiert werden. Ob ein Copolymerisat dafür geeignet ist, muß durch einen Vorversuch geprüft werden, da bei dieser Verfahrensvariante unter ungünstigen Bedingungen Gelteilchen gebildet werden können.

Nach Abschluß der Imidierungsreaktion kann, falls erforderlich, überschüssiger Aminoalkohol, bevorzugt azeotrop mit einem geeigneten Lösungsmittel wie z.B. Xylol, Butylacetat, Solvent Naphta, Oxohexylacetat, durch kurzes Andestillieren aus dem Endprodukt entfernt werden.

Bei der Imidierungsreaktion können z.B. zur Reduzierung von Verfärbungsreaktionen geringe Mengen an Stabilisatoren wie z.B. Triphenylphosphit, phosphorige Säure, Dicyclopentadien, Anthracen, Isopren zugesetzt werden.

Gemäß einer weiteren Ausbildung des erfindungsgemäßen Verfahrens werden die zunächst als erfindungsgemäße Verfahrensprodukte anfallenden Polyimidpolyole durch Umsetzung mit Lactonen unter ringöffnender Esterbildung modifiziert.

Geeignete Lactone sind z.B. solche, die 3 bis 15 Kohlenstoffatome im Ring enthalten, wobei die Ringe auch verschiedene Substituenten aufweisen können. Bevorzugte Lactone sind γ-Butyrolacton, δ-Valerolacton, ε-Caprolacton, β-Hydroxy-β-methyl-δ-valerolacton.

Die Lactone werden in Mengen von 0,05 bis 5,0 Mol, bevorzugt 0,25 bis 2,5 Mol Lacton pro Hydroxylgruppe im Polyimidcopolymerisat eingesetzt. Die Umsetzung erfolgt bei 100 bis 150°C während 0,5 bis 5 Stunden, wobei gegebenenfalls geeignete Katalysatoren wie z.B. para-Toluolsulfonsäure, Dibutylzinnoxid, Dibutylzinndilaurat in Mengen von 0,01 bis 1,0 % zugesetzt werden können.

Bei dieser Variante entstehen erfindungsgemäße hydroxyfunktionelle Copolymerisate mit Struktureinheiten der Formel I, in denen der Rest R₁ nicht mit dem Rest R₁ des ursprünglich eingesetzten Aminoalkohols übereinstimmt, sondern vielmehr zusätzlich Estergruppierungen aufweist.

Die erfindungsgemäßen, hydroxyfunktionellen Polyimidcopolymerisate sind gut lösliche Polymere mit Säurezahlen <25 und einem sehr variablen Hydroxylgruppengehalt von 0,1 bis zu 35 Gew.-%, vorzugsweise von 0,5 bis 8 Gew.-%. Sie können z.B. als Bindemittel oder Bindemittelkomponente in Lacken, Beschichtungsmitteln, Dichtmassen, Klebstoffen oder Druckfarben eingesetzt werden Sie sind besonders gut als Reaktionspartner für organische Polyisocyanate in Zweikomponenten-Polyurethanlacken geeignet und können hierbei gegebenenfalls in Abmischung mit anderen nieder-oder höhermolekularen Verbindungen mit gegenüber Isocyanatgruppen reaktionsfähigen Wasserstoffatomen, insbesondere Polyhydroxylverbindungen zum Einsatz gelangen.

In den nachfolgenden Beispielen beziehen sich alle Angaben in "Teilen" und "Prozent" auf das Gewicht, falls nicht ausdrücklich etwas anderes vermerkt ist.

### Beispiele

Alle Produkte werden unter Stickstoffatmosphäre hergestellt.

### Beispiel 1

a) In einem 5-l-Reaktionsgefäß mit Rühr-, Kühl- und Heizvorrichtung werden 677 g Butylacetat vorgelegt und auf 125°C erhitzt. Eine Mischung aus 300 g Butylacetat, 480 g Maleinsäureanhydrid, 900 g Butylacrylat, 600 g Methylmethacrylat und 1020 g Styrol werden in 4 Stunden und parallel dazu 343 g tert.-Butylperoctoat (70 %ige Lösung in Kohlenwasserstoffen) in 5 Stunden zudosiert. Nach 1 h Nachrührzeit erhält man ein ca. 75 %iges anhydridfunktionelles Copolymerisat mit einem Maleinsäureanhydridgehalt von 14,8 Gew.-% und einem Molekulargewicht Mn von 5200.
b) In einem 2-l-Reaktionsgefäß mit Rühr-, Kühl- und Heizvorrichtung werden 63,6 g Aminoethanol (1,1 Äquivalente) und 318 g Solventnaphta (Gemisch aromatischer Kohlenwasserstoffe mit einem Siedebereich von ca. 160 bis 185°C) vorgelegt, auf 140°C aufgeheizt und dann 1000 g Polymerisat 1a) (1,0 Äquivalente), welches mit Solventnaphta auf einen Festgehalt von 62,7 % verdünnt wurde, in etwa einer Stunde zudosiert. Die Reaktionstemperatur fällt dabei auf 125°C. Nach dem Zudosieren wird der Rückflußkühler gegen einen Wasserabscheider ausgetauscht und der Ansatz etwa 5 Stunden am Rückfluß gehalten, bis kein Reaktionswasser mehr abgespalten wird. Im Verlauf der Reaktion wird durch Ablassen von Schleppmittel die Rückflußtemperatur auf ca. 148°C gesteigert. Dabei wird auch das überschüssige Ethanolamin azeotrop entfernt. Man erhält das hydroxyfunktionelle Polyimidcopolymerisat 1) als klare, 52,6 %ige Lösung. Die Gesamtsäurezahl beträgt 4,1 (100 %ig), der rechnerisch ermittelte Gehalt an Hydroxylgruppen beträgt ca. 2,4 % (100 %ig). Das Copolymer enthält ca. 18 Gew.-% der Struktureinheit:

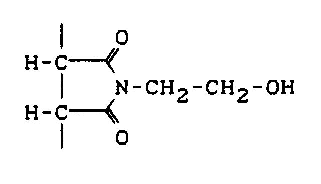

### Beispiel 2

a) In einem 5-l-Reaktionsgefäß mit Rühr-, Kühl- und Heizvorrichtung werden 1667 g ®Exxate 600 (Oxohexylacetat, Exxon Chemicals) vorgelegt und auf 148°C erhitzt. In 3 Stunden wird eine Mischung aus 375 g Maleinsäureanhydrid, 750 g Butylacrylat, 300 g Methylmethacrylat und 950 g Styrol zugegeben, parallel dazu werden 125 g Di-tert.-butylperoxid in 3,5 Stunden zudosiert und der Ansatz noch 2 Stunden nachgerührt. Man erhält ein ca. 60 %iges, anhydridfunktionelles Copolymerisat mit einem Maleinsäureanhydridgehalt von 15 Gew.-% und einem Molgewicht Mn von 2950.
b) Nach dem unter 1b) beschriebenen Verfahren werden 61,9 g Aminoethanol (1,1 Äquivalente) gelöst in 268 g Exxate 600 und 1000 g (1,0 Äquivalente) Vorstufe 2a) umgesetzt. Man erhält das hydroxyfunktionelle Polyimidcopolymerisat 2) als klare, 52,9 %ige Lösung. Die Gesamtsäurezahl beträgt 2,8 (100 %ig), der rechnerisch ermittelte Gehalt an Hydroxylgruppen beträgt ca. 2,5 % (100 %ig). Das Copolymer enthält ca. 19 Gew.-% der in Beispiel 1 gezeigten Struktureinheit.

### Beispiel 3

a) In einem 5-l-Reaktionsgefäß mit Rühr-, Kühl- und Heizvorrichtung werden 677 g Solventnaphta vorgelegt und auf 142°C erhitzt. Eine Mischung aus 300 g Solventnaphtha, 420 g Maleinsäureanhydrid, 900 g Butylacrylat, 660 g Methylmethacrylat und 1020 Styrol werden in 4 Stunden und parallel dazu 343g tert.-Butylperoctoat (70 %ig) in 5 Stunden zudosiert. Nach 1 Stunde Nachrühren erhält man ein ca. 75 %iges anhydridfunktionelles Copolymerisat, welches 13 Gew.-% Maleinsäureanhydrid enthält und ein Molekulargewicht Mn von 2610 aufweist.
b) In ein 1-l-Reaktionsgefäß mit Rühr-, Kühl- und Heizvorrichtung und Wasserabscheider werden 240 g anhydridfunktionelles Copolymerisat 3a) (1,0 Äquivalente) und 163 g Solventnaphta vorgelegt und bei Raumtemperatur auf einmal 14,5 g Aminoethanol (1,0 Äquivalente) zugegeben. Dann wird auf ca. 130°C aufgeheizt, wobei ein hochviskoses Zwischenstadium durchlaufen wird, und so lange Wasser abgespalten, bis die Umsetzung nahezu vollständig ist. Dabei steigt die Temperatur bis etwa 140°C an. Man erhält das klar gelöste, hydroxyfunktionelle Polyimidcopolymerisat 3) mit einem Festgehalt von 47,0 %, einer Gesamtsäurezahl von 6,6 (100 %ig) und einem berechneten Hydroxylgruppengehalt von ca. 2,1 % (100 %ig). Der Anteil der im Beispiel 1b) gezeigten Struktureinheit beträgt ca. 16 Gew.-%.

### Beispiel 4

a) In einem 2-l-Reaktionsgefäß mit Rühr-, Kühl- und Heizvorrichtung werden 985 g Xylol auf 120°C erhitzt, eine Mischung aus 150 g Maleinsäureanhydrid, 250 g Butylacrylat, 365 g Methylmethacrylat, 200 g Vinylacetat in 3 Stunden und parallel dazu 50 g tert.-Butylperoctoat in 3,5 Stunden zudosiert. Nach 2 Stunden Nachrühren erhält man ein ca. 50 %iges anhydridfunktionelles Copolymerisat, welches 15 Gew.-% Maleinsäureanhydrid enthält und ein Molekulargewicht Mn von 2900 aufweist.
b) Nach dem unter 1b) beschriebenen Verfahren werden 400 g Vorstufe 4a) (1,0 Äquivalente), 75 g Xylol und 25,3 g 2-Amino-1-propanol (1,1 Äquivalente) umgesetzt. Man erhält das gelöste, hydroxyfunktionelle Polyimidcopolymerisat 4) mit einem Festgehalt von ca. 43 %, einer Gesamtsäurezahl von ca. 14 (100 %ig) und einem berechneten Hydroxylgruppengehalt von ca. 2,4 % (100 %ig). Der Anteil an folgender Struktureinheit 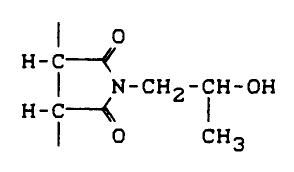 beträgt etwa 20 Gew.-%.

### Beispiel 5

a) In einem 2-l-Reaktionsgefäß mit Rühr-, Kühl- und Heizvorrichtung werden 420 g Solventnaphta und 105 g Methoxypropylacetat auf 150°C erhitzt. Eine Mischung aus 240 g Maleinsäureanhydrid, 450 g Butylacrylat und 810 g Styrol wird in 4 Stunden und parallel dazu 75 g Di-tert.-butylperoxid in 5 Stunden zudosiert. Dann wird so lange andestilliert, bis die Reaktionstemperatur wieder auf 150°C angestiegen ist und noch zwei Stunden nachgerührt. Man erhält ein etwa 75 %iges anhydridfunktionelles Copolymerisat, welches mit Butylacetat auf ca. 60 % Festgehalt verdünnt wird. Der Maleinsäureanhydridgehalt beträgt 15,2 %, das Molekulargewicht Mn 4000.
b) In einem 2-l-Reaktionsgefäß werden 63,2 g Aminoethanol (1,0 Äquivalente), 147,2 g Solventnaphta und 147,2 g Butylacetat auf 120°C erhitzt, dann in 15 Minuten 1100 g Vorstufe 5a) (1,0 Äquivalente) zugegeben und auf 140°C erhitzt. Durch Ablassen von Lösemittel wird die Rückflußtemperatur auf 148°C eingestellt und nach etwa 3 Stunden Reaktionszeit 3,1 g (0,05 Äquivalente) Aminoethanol nachträglich zugegeben. Nach dem Ende der Wasserabspaltung wird der Ansatz kurz andestilliert und dann mit Methoxypropylacetat auf einen Festgehalt von 50,5 % verdünnt. Das hydroxyfunktionelle Polyimidcopolymerisat 5) hat eine Gesamtsäurezahl von 9,3 (100 %ig) und einen berechneten Hydroxylgruppengehalt von ca. 2,4 %. Der Anteil der in Beispiel 1b) beschriebenen Struktureinheit beträgt ca. 19 Gew.-%.

### Beispiel 6

a) In einem 4-l-Reaktionsgefäß mit Rühr-, Kühl- und Heizvorrichtung werden 1566 g Butylacetat auf 125°C erhitzt, eine Mischung aus 400 g Butylacetat, 400 g Maleinsäureanhydrid, 920 g Butylacrylat, 400 g MMA und 200 g Styrol in 3 Stunden und parallel dazu 57 g tert.-Butylperoctoat in 3,5 Stunden zudosiert. Nach 2 Stunden Nachrühren erhält man eine etwa 50 %ige Lösung eines anhydridfunktionellen Copolymerisats mit 20 % Maleinsäureanhydrid und einem Molekulargewicht Mn von 3800.
b) Nach dem in Beispiel 1b) beschriebenen Verfahren werden 80,4 g Aminoethanol (1,3 Äquivalente), 203 g Solventnaphta und 1000 g Vorstufe 6a) (1,0 Äquivalente) umgesetzt. Man erhält das klar gelöste, hydroxyfunktionelle Polyimidcopolymerisat 6) mit einer Gesamtsäurezahl von 9 (100 %ig), einem berechneten Hydroxylgruppengehalt von 3,0 % (100 %ig), einen Festgehalt von 52,4 %, und einen Gehalt an der im Beispiel 1b) beschriebenen Struktureinheit von ca. 25 Gew.-%.

### Beispiel 7

a) In einen 25-kg-Reaktionskessel mit Rühr-, Kühl- und Heizvorrichtung werden 3333 g Butylacetat und 1667 g Solventnaphta auf 136°C erhitzt. Eine Mischung aus 1830 g Maleinsäureanhydrid, 3538 g Butylacrylat, 1830 g Methylmethacrylat und 4392 g Styrol werden in 4 Stunden und parallel dazu 871 g tert.-Butylperoctoat (70 %ig) gelöst in 349 g Butylacetat in 4 1/2 Stunden zudosiert. Nach 3 Stunden Nachrühren erhält man ein ca. 60 %iges anhydridfunktionelles Copolymerisat mit einem Maleinsäureanhydridgehalt von 15 % und einem Molekulargewicht Mn von 4050.
b) Nach dem in Beispiel 1b) beschriebenen Verfahren werden 73,4 g Aminoethanol (1,3 Äquivalente), 283 g Solventnaphta und 1000 g (1,0 Äquivalente) Vorstufe 7a) umgesetzt. Man erhält das hydroxyfunktionelle Polyimidcopolymerisat 7) als 54,6 %ige Lösung. Die Gesamtsäurezahl ist ca. 3,5 (100 %ig, der berechnete Hydroxylgruppengehalt ist ca. 2,4 % (100 %ig) und der Gehalt an der im Beispiel 1b) beschriebenen Struktureinheit ca. 19 Gew.-%.

### Beispiel 8

a) In einen 25-l-Reaktionskessel mit Rühr-, Kühl- und Heizvorrichtung werden 2500 g Butylacetat und 2500 g Solventnaphta auf 160°C aufgeheizt. Eine Mischung aus 1400 g Solventnaphta, 790 g Butylacetat, 1830 g Maleinsäureanhydrid, 3480 g Butylacrylat und 6280 g Styrol wird in 4 Stunden und parallel dazu 610 g Di-tert.-butylperoxid gelöst in 610 g Butylacetat in 4,5 Stunden zudosiert Nach 3 Stunden Nachrühren bei 155°C erhält man ein anhydridfunktionelles Copolymerisat mit 14 % Maleinsäureanhydrid, einen Festgehalt von 63 % und einem Molekulargewicht Mn von 2850.
b) Nach dem in Beispiel 1b) beschriebenen Verfahren werden 38,2 g Aminoethanol, 103,6 g Solventnaphta, 103,6 g Butylacetat und 650 g Vorstufe 8a) umgesetzt. Gegen Reaktionsende wurden 100 g Methoxypropylacetat zugegeben. Man erhält das hydroxyfunktionelle Polyimidcopolymerisat 8) mit einer Gesamtsäurezahl von 15 (100 %ig), einen Festkörper von 54 %, einen Gehalt der in Beispiel 1b) beschriebenen Struktureinheit von ca. 17 Gew.-% und einem berechneten Hydroxylgruppengehalt von ca. 2,3 % (100 %ig).

### Beispiel 9

a) In einen 10-l-Reaktionskessel mit Rühr-, Kühl- und Heizvorrichtung werden 1125 g Butylacetat und 1125 g Solventnaphta auf 138°C erhitzt. Eine Mischung aus 571 g Solventnaphta, 415 g Butylacetat, 824 g Maleinsäureanhydrid, 1592 g Butylacrylat, 824 g Methylmethacrylat und 1976 g Styrol wird in 3 Stunden und parallel dazu 392 g tert.-Butylperoctoat (70 %ig) und 156 g Butylacetat in 3,5 Stunden zudosiert. Nach 2 Stunden Nachrühren erhält man eine 60 %ige Lösung eines anhydridfunktionellen Copolymerisats mit einem Maleinsäureanhydridgehalt von 15 % und einem Molekulargewicht Mn von 3900.
b) Nach dem im Beispiel 1b) beschriebenen Verfahren werden 61,6 g Aminoethanol (1,1 Äquivalente), 261,6 g Solventnaphta und 1000 g Vorstufe 9a) (1,0 Äquivalente) umgesetzt. Man erhält das klar gelöste, hydroxyfunktionelle Polyimidcopolymerisat 9) mit einem Festgehalt von 55,5 %, einer Gesamtsäurezahl von 7 (100 %ig), einem berechneten Hydroxylgruppengehalt von 2,4 % (100 %ig) und einem Gehalt von 18 % an der in Beispiel 1b) beschriebenen Struktureinheit.

### Beispiel 10

a) In einem 4-l-Reaktionsgefäß mit Rühr-, Kühl- und Heizvorrichtung werden 400 g Solventnaphta auf 160°C erhitzt. Eine Mischung aus 225 g Solventnaphta, 400 g Maleinsäureanhydrid, 1250 g 2-Ethylhexylmethacrylat, 350 g Cyclohexylmethacrylat und 500 g Styrol wird in 4 Stunden und parallel dazu 200 g Di-tert.-butylperoxid in 4,5 Stunden zudosiert. Dabei sinkt die Polymerisationstemperatur auf 130°C ab, sie wird 0,5 Stunden nach der Peroxidzugabe durch Andestillieren auf 150°C angehoben und der Ansatz noch 3 Stunden nachgerührt. Man erhält eine ca. 78,5 %ige Lösung eines anhydridfunktionellen Copolymerisats mit einem Maleinsäureanhydridgehalt von 14,8 % und einem Molekulargewicht Mn von 2800.
b) Nach dem in Beispiel 1b) beschriebenen Verfahren werden 16,7 g Aminoethanol (1,0 Äquivalente), 193 g Solventnaphta und 229 g (1,0 Äquivalente) Vorstufe 10a) umgesetzt. Man erhält eine ca. 49 %ige klare Lösung des hydroxyfunktionellen Polyimidcopolymerisats 10), dessen Gesamtsäurezahl 9,5 (100 %ig), der berechnete Hydroxylgruppenhalt ca. 2,4 % (100 %ig) und der Anteil der in Beispiel 1b) beschriebenen Struktureinheit ca. 18 Gew.-% beträgt. Das Molekulargewicht Mn beträgt 2852.

### Beispiel 11

a) In einem 4-l-Reaktionsgefäß mit Rühr-, Kühl- und Heizvorrichtung werden 1333 g Solventnaphta auf 147°C erhitzt. Eine Mischung aus 100 g Maleinsäureanhydrid, 500 g Methylmethacrylat, 600 g Butylacrylat und 700 g Styrol wird in 3,5 Stunden und parallel dazu 100 g Di-tert.-butylperoxid in 4 Stunden zudosiert. Nach 1,5 Stunden Nachrühren erhält man eine ca. 60 %ige Lösung eines anhydridfunktionellen Copolymerisats mit einem Maleinsäureanhydridgehalt von 5 % und einem Molekulargewicht Mn von 2400.
b) Nach dem im Beispiel 3b) beschriebenen Verfahren werden 5,6 g Aminoethanol (1,0 Äquivalente), 107 g Solventnaphta und 300 g Vorstufe 11a) (1,0 Äquivalente) zu dem hydroxyfunktionellen Polyimidcopolymerisat 11) umgesetzt, das als klare, 47 %ige Lösung erhalten wird. Die Gesamtsäurezahl beträgt 7 (100 %ig), der berechnete Hydroxylgruppengehalt ca. 0,8 % (100 %ig und der Anteil an der in Beispiel 1b) beschriebenen Struktureinheit ca. 6,5 Gew.-%.

### Beispiel 12

a) In einem 2-l-Reaktionsgefäß mit Rühr-, Kühl- und Heizvorrichtung werden 985 g Xylol auf 120°C erhitzt. Eine Mischung aus 150 g Maleinsäureanhydrid, 250 g Butylacrylat, 365 g Methylmethacrylat und 200 g Butylvinylether wird in 3 Stunden und parallel dazu 50 g tert.-Butylperoctoat in 3,5 Stunden zudosiert. Nach 2 Stunden Nachrühren erhält man eine ca. 50 %ige Lösung eines anhydridfunktionellen Copolymerisats mit einem Maleinsäureanhydridgehalt von 15 % und einem Molekulargewicht Mn von 2700.
b) Nach dem in Beispiel 1b) beschriebenen Verfahren werden 400 g (1,0 Äquivalente) Vorstufe 12a), 75,4 g Xylol und 25,3 g 1-Amino-2-propanol (1,1 Äquivalente) zu dem hydroxyfunktionellen Polyimidcopolymerisat 12) umgesetzt. Die klare Lösung hat einen Festgehalt von ca. 44 %. Die Gesamtsäurezahl beträgt 7 (100 %ig), der berechnete Hydroxylgruppengehalt ist ca. 2,4 % (100 %ig, und der Anteil an der in Beispiel 4b) beschriebenen Struktureinheit ist ca. 20 Gew.-%

### Beispiel 13

a) In einem 6-l-Reaktionsgefäß mit Rühr-, Kühl- und Heizvorrichtung werden 2046 g Isoamylacetat auf 138°C aufgeheizt. Eine Mischung aus 375 g Maleinsäureanhydrid, 750 g Butylacrylat, 300 g Methylmethacrylat und 950 g Styrol wird in 3 Stunden und parallel dazu 25 g Di-tert.-butylperoxid in 3,5 Stunden zudosiert. Nach 2 Stunden Nachrühren erhält man ein 55 %iges, anhydridfunktionelles Copolymerisat mit einem Maleinsäureanhydridgehalt von 15 % und einem Molekulargewicht Mn von 6700.
b) Nach dem in Beispiel 1b) beschriebenen Verfahren werden 330 g (1,0 Äquivalente) Vorstufe 13a), 230 g Isoamylacetat und 24,8 g (1,2 Äquivalente) 1-Amino-2-propanol umgesetzt. Man erhält das hydroxyfunktionelle Polyimidcopolymerisat 13) als klare, 42%ige Lösung. Die Gesamtsäurezahl beträgt 14 (100%ig), der berechnete Hydroxylgruppengehalt 2,3% (100%ig). Das Polymer enthält etwa 21 Gew.-% der im Beispiel 4b beschriebenen Struktureinheit.

### Beispiel 14

363 g Copolymerisat (1,0 Äquivalente) 2a) werden nach dem in 1b) beschriebenen Verfahren mit 40 g 4-Aminophenol (1,1 Äquivalente) und 150 g Exxate 600 zur Reaktion gebracht. Man erhält das hydroxyfunktionelle Polyimidcopolymerisat 14) als dunkle, klare, 45-%ige Lösung. Das Polymer enthält ca. 24 Gew.-% folgender Struktureinheit:

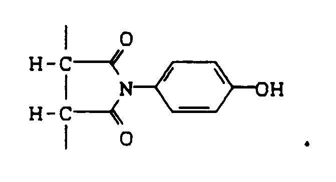

### Beispiel 15

363 g Copolymerisat (1,0 Äquivalente) 2a) werden nach dem in 1b) beschriebenen Verfahren mit 47 g N-Methyl-N-(3-aminopropyl)-ethanolamin (1,1 Äquivalente) und 150 g Exxate 600 zur Reaktion gebracht. Man erhält das hydroxyfunktionelle Polyimidcopolymerisat 15) als klare Lösung mit einem Festgehalt von ca. 45 %. Die Gesamtsäurezahl beträgt 6 (100%ig). Der berechnete Gehalt an Hydroxylgruppen ist ca. 2,1 % (100%ig). Das Polymer enthält ca. 22 Gew.-% folgender Struktureinheit:

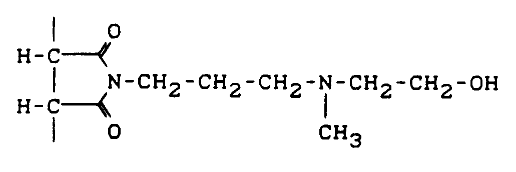

### Beispiel 16

a) In einem 4-l-Reaktionsgefäß mit Rühr-, Kühl- und Heizvorrichtung werden 208 g Solventnaphtha und 208 g Butylacetat auf 120°C erhitzt. Eine Mischung aus 700 g Maleinsäureanhydrid, 700 g Styrol, 540 g 2-Ethylhexylacrylat, 208 g Solventnaphtha und 208 g Butylacetat wird in 3 Stunden und parallel dazu 86 g tert.-Butylperoctant in 3,5 Stunden zudosiert. Nach 2 Stunden Nachrühren erhält man das 70%ige, anhydridfunktionelle Copolymerisat 16), welches einen Maleinsäureanhydridgehalt von 35 % (100%ig) und ein Molekulargewicht Mn von 3600 aufweist.
b) Nach dem in Beispiel 1 b) beschriebenen Verfahren werden 31,5 g (1,1 Äquivalente) 1-Amino-2-propanol, 360 g Exxate 600 und 300 g Polymerisat 16 a) (1,0 Äquivalente) umgesetzt. Man erhält das hydroxyfunktionelle Polyimidcopolymerisat 16), welches einen Hydroxylgruppengehalt von 4,9 %, (100%ig), eine Gesamtsäurezahl von ca. 14 (100%ig) sowie ca. 40 Gew.-% der in Beispiel 4 beschriebenen Struktureinheit aufweist.

### Beispiel 17

a) In einem 2-l-Reaktionsgefäß mit Rühr-, Kühl- und Heizvorrichtung werden 300 g Exxate 600 (Exxon Chemicals) auf 140°C erhitzt. Eine Mischung aus 100 g Maleinsäureanhydrid, 296 g Methylmethacrylat, 208 g Butylacrylat, 80 g Ethylhexylmethacrylat und 100 g Styrol wird in 3 Stunden, und parallel dazu 22,9 g tert.-Butylperoktoat (70%ig) in 3,5 Stunden zudosiert. Nach 2 Stunden Nachrühren erhält man ein ca. 75%iges, anhydridfunktionelles Copolymerisat mit einem Maleinsäureanhydridgehalt von 12,5% und einem Molekulargewicht Mn von 3300.
b) Nach dem in Beispiel 1 b) beschriebenen Verfahren werden 500 g (1,0 Äquivalente) anhydridfunktionelles Copolymerisat 17 a), welches vorher mit Solventnaphtha auf 55% Festgehalt verdünnt wurde, 73,5 g Solventnaphtha und 23,5 g (1,1 Äquivalente) Aminoethanol umgesetzt. Man erhält das klar gelöste, hydroxylfunktionelle Copolymerisat 17) mit einem Festgehalt von 44,6 %, einer Gesamtsäurezahl von 10 (100%ig), einem Hydroxylgruppengehalt von ca. 2,0% (100%ig) berechnet, bzw. 2,0 % (100%ig) gemessen und einem Anteil an der in Beispiel 1 b) beschriebenen Struktureinheit von ca. 16 Gew.-%.

### Beispiel 18

a) In einem 2-l-Reaktionsgefäß mit Rühr-, Kühl- und Heizvorrichtung werden 300 g Exxate 600 auf 140°C erhitzt, in 3 Stunden eine Mischung aus 160 g Maleinsäureanhydrid, 160 g Methylmethacrylat, 208 g Butylacrylat, 80 g 2-Ethylhexylmethacrylat und 160 g Styrol, sowie parallel dazu in 3,5 Stunden 45,9 g tert.-Butyl-peroktoat (70%ig) und 29 g Exxate 600 zudosiert. Nach 2 Stunden Nachrühren erhält man ein etwa 70%iges, anhydridfunktionelles Copolymerisat mit einem Gehalt an Maleinsäureanhydrid von 20% und einem Molekulargewicht Mn von 2850.
b) Nach dem in Beispiel 1 b) beschriebenen Verfahren, werden 37,6 g Aminoethanol (1,1 Äquivalente), 87,6 g Solventnaphtha und 500 g (1,0 Äquivalente) Copolymerisat 18 a), welches vorher mit Solventnaphtha auf 55% Festgehalt verdünnt wurde, umgesetzt Nach Abschluß der Reaktion wird mit Butylacetat auf FK 40% verdünnt Das erhaltene hydroxyfunktionelle Copolymerisat 18) hat eine Gesamtsäurezahl von 7 (100%) und einen Gehalt an der im Beispiel 1 b) beschriebenen Struktureinheit von ca. 25 Gew.-%. Der gemessene Hydroxylgruppengehalt beträgt 2,5 % (100%ig).

### Beispiel 19

a) In einem 4-l-Reaktionsgefäß mit Rühr-, Kühl- und Heizvorrichtung werden 1602 g Xylol auf 120°C erhitzt, eine Mischung aus 300 g Maleinsäureanhydrid, 600 g Butylacrylat, 420 g 2-Ethylhexylmethacrylat und 600 g Styrol in 3 Stunden und parallel dazu 114 g tert.-Butylperoktoat (70%ig) in 3,5 Stunden zudosiert. Anschließend wird auf 140°C aufgeheizt und 2 Stunden nachgerührt. Man erhält ein etwa 55%iges, Anhydridgruppen enthaltendes Copolymerisat, welches 15% Maleinsäureanhydrid enthält und ein Molekulargewicht Mn von 3800 aufweist.
b) Nach dem im Beispiel 1 b) beschriebenen Verfahren werden 27,7 g (1,1 Äquivalente) Aminoethanol, 132 g Xylol und 500 g (1,0 Äquivalente), Polymerisatvorstufe 19 a) umgesetzt. Man erhält das hydroxyfunktionelle Polyimidcopolymerisat 19) mit einem Festgehalt von ca. 49%, einer Gesamtsäurezahl von 6 (100%ig), einem berechneten und gemessenen Hydroxylgruppengehalt von ca. 2,4% (100%ig) und einem Anteil von ca. 19 Gew.-% der in Beispiel 1 b) beschriebenen Struktureinheit.

### Beispiel 20

a) In einem 1-l-Reaktionsgefäß mit Rühr-, Kühl- und Heizvorrichtung werden 450 g Solventnaphtha auf 160°C erhitzt, eine Mischung aus 75 g Maleinsäureanhydrid, 20 g Hexandiolbisacrylsäureester, 225 g Butylacrylat, 130 g Styrol und 10 g n-Dodecylmercaptan in 3 Stunden und parallel dazu 30 g Ditert.-butylperoxid und 50 g Solventnaphtha in 4 Stunden zudosiert. Nach 1 Stunde Nachrühren erhält man ein etwa 50%iges, anhydridfunktionelles Copolymerisat mit einem Maleinsäureanhydridgehalt von 15%.
b) Nach dem in Beispiel 1 b) beschriebenen Verfahren werden 21,3 g (1,1 Äquivalente) Aminoethanol, 87,4 g Solventnaphtha und 400 g (1,0 Äquivalente) Vorstufe 20 a) umgesetzt. Man erhält das hydroxyfunktionelle Polyimidcopolymerisat 20) mit einem Festgehalt von 47%, einer Gesamtsäurezahl von 1,5 (100%ig), einem Hydroxylgruppengehalt von ca. 2,4% (100%ig) und einem Gehalt von ca. 19 Gew.-% der im Beispiel 1 b) beschriebenen Struktureinheit.

### Beispiel 21

a) In einem 4-l-Reaktionsgefäß mit Rühr-, Kühl- und Heizvorrichtung werden 415 g Butylacetat und 416 g Solventnaphtha auf 120°C aufgeheizt. Eine Mischung aus 300 g Maleinsäureanhydrid, 640 g Methylmethacrylat, 600 g Butylacrylat, 100 g 2-Ethylhexylacrylat und 300 g Styrol wird in 3 Stunden und parallel dazu 86 g tert.-Butylperoktoat (70%ig) in 3,5 Stunden zudosiert. Nach 2 Stunden Nachrühren erhält man ein ca. 70-%iges, anhydridfunktionelles Copolymerisat mit einem Gehalt an Maleinsäureanhydrid von 15% und einem Molekulargewicht Mn von 5300.
b) Nach den in Beispiel 1 b) beschriebenen Verfahren werden 16,8 g Aminoethanol (1,2 Äquivalente), 160 g Solventnaphtha und 300 g (1,0 Äquivalente) des anhydridfunktionellen Polymerisats aus 21 a), welches zuvor mit Solventnaphtha auf 50% Festgehalt verdünnt wurde, umgesetzt. Man erhält das hydroxyfunktionelle Polyimidcopolymerisat 21) mit einer Gesamtsäurezahl von ca. 6 (100%ig), einem Festgehalt von ca. 43%, einem Hydroxylgruppengehalt von ca. 2,4% (100%ig) und einem Gehalt von etwa 19 Gew.-% der in Beispiel 1 b) beschriebenen Struktureinheit.

### Beispiel 22

a) In einem 2-l-Reaktionsgefäß mit Rühr-, Kühl- und Heizvorrichtung werden 985 g Xylol vorgelegt und auf 110°C erhitzt. Eine Mischung aus 45 g Methylmethacrylat, 200 g Vinylacetat, 120 g Maleinsäureanhydrid, 100 g Laurylmethacrylat, 200 g Ethylacrylat, 200 g Cyclohexylmethacrylat und 100 g C_{17,4}-Methacrylat (Methacrylsäureestergemisch mit durchschnittlich 17,4 Kohlenstoffatomen im Alkoholrest, Röhm GmbH) wird in 3 Stunden und parallel dazu 50 g tert.-Butylperoktoat in 3,5 Stunden zudosiert. Nach 2 Stunden Nachrühren erhält man ein etwa 48%iges, anhydridfunktionelles Copolymer mit einem Gehalt an Maleinsäureanhydrid von 12 % und einem Molekulargewicht Mn von 3400.
b) Nach dem in Beispiel 16 beschriebenen Verfahren setzt man 20,2 g 1-Amino-3-propanol (1,1 Äquivalente), 69 g Xylol und 400 g (1,0 Äquivalente) anhydridfunktionelles Copolymerisat 22 a) um. Man erhält eine Lösung des hydroxylfunktionellen Polyimidcopolymerisats 22) einer Gesamtsäurezahl von ca. 15 (100%ig), einem Hydroxylgruppengehalt von ca. 1,8 % (100%ig) und einem Gehalt von ca. 14 % der folgenden Struktureinheit.

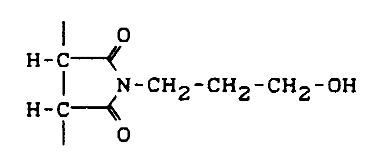

### Beispiel 23

300 g (1,0 Äquivalente) des in Beispiel 2 a) beschriebene anhydridfunktionellen Copolymerisat werden nach dem in Beispiel 1 b) beschriebenen Verfahren mit 46,6 g 2-(4-Aminophenoxy)-ethanol (1,1 Äquivalente) in 158 g Exxate 600 umgesetzt. Man erhält das Hydroxygruppen enthaltende Polyimidcopolymerisat 23) mit einer Gesamtsäurezahl von 13 (100%ig), einem Festgehalt von 45 %, einem Hydroxylgruppengehalt von ca. 2,0 % (100%ig) und einem Anteil von ca. 25 Gew.-% an folgender Struktureinheit

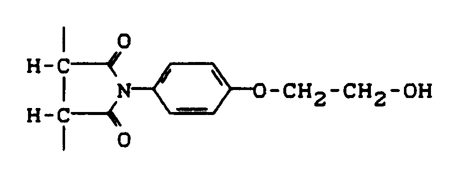

### Beispiel 24

a) In einem 2-l-Reaktionsgefäß werden 881 g Xylol auf 120°C erhitzt. Eine Mischung aus 220 g Maleinsäureanhydrid, 110 g Methylmethacrylat, 121 g Butylacrylat, 385 g 2-Ethylhexylmethacrylat und 220 g Styrol wird in 3 Stunden und parallel dazu 63 g tert.-Butylperoktoat in 3,5 Stunden zudosiert. Nach 2 Stunden Nachrühren erhält man ein etwa 55%iges anhydridfunktionelles Copolymerisat mit einem Gehalt an Maleinsäureanhydrid von 20% und einem Molekulargewicht Mₙ von 3300.
b) Nach dem in Beispiel 1 b) beschriebenen Verfahren wurden 45,9 g(1,1 Äquivalente) 1-Amino-2-propanol, 161,7 g Xylol und 500 g des in 24 a) beschriebenen anhydridfunktionellen Copolymerisats (1,0 Äquivalente) umgesetzt. Man erhält das klar gelöste, hydroxyfunktionelle Polyimidcopolymerisat 24) mit einem Festgehalt von ca. 49%, einer Gesamtsäurezahl von 10 (100%ig), einem berechneten Hydroxylgruppengehalt von ca. 3,0% (100%ig) und einem Gehalt an der in Beispiel 46) beschriebenen Struktureinheit von ca. 27 Gew.-%.

### Beispiel 25

a) In einem 2-l-Reaktionsgefäß mit Rühr-, Kühl- und Heizvorrichtung werden 881 g Xylol auf 120°C erhitzt. Eine Mischung aus 165 g Maleinsäureanhydrid, 330 g Methylmethacrylat, 396 g 2-Ethylhexylmethacrylat und 165 g Styrol werden in 3 Stunden und parallel dazu 63 g tert.-Butylperoktoat (70%ig) in 3,5 Stunden zudosiert. Nach 2 Stunden Nachrühren erhält man eine etwa 55%ige Lösung eines anhydridfunktionellen Copolymerisats mit einem Gehalt an Maleinsäureanhydrid von 15% und einem Molekulargewicht Mₙ von 3300.
b) Nach dem in Beispiel 1 b) beschriebenen Verfahren werden 34 g (1,1 Äquivalente) 1-Amino-2-propanol, 140,4 g Xylol und 500 g (1,0 Äquivalente) des in 25 a) beschriebenen anhydridfunktionellen Copolymerisats zur Reaktion gebracht. Man erhält das hydroxyfunktionelle Polyimidcopoymerisat 25) als etwa 49%ige klare Lösung, mit einer Gesamtsäurezahl von 10 (100%ig), einem berechneten Hydroxylgruppengehalt von ca. 2,3% (100%ig) und einem Anteil an der in Beispiel 46) beschriebenen Struktureinheit von ca. 21 Gew.-%.

### Beispiel 26

500 g (1,0 Äquivalente) des in Beispiel 11 a) beschriebenen anhydridfunktionellen Copolymerisats, 189 g Solvent Naphtha und 19,5 g 2-Amino-2-hydroxymethyl-1,3-propandiol (1,05 Äquivalente) werden nach dem in Beispiel 1 b) beschriebener Verfahren zur Reaktion gebracht. Man erhält das hydroxyfunktionelle Polyimidcopolymerisat 26) als etwa 47%ige Lösung. Die Gesamtsäurezahl beträgt 8 (100%ig), der Anteil an Hydroxylgruppen ist ca. 2,4% (100%ig). Das Polymer enthält etwa 9 Gew.-% folgender Struktureinheit:

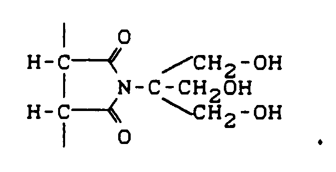

### Beispiel 27

a) In einem 2-l-Reaktionsgefäß mit Rühr-, Kühl- und Heizvorrichtung werden 800 g Xylol auf 120°C erhitzt. Eine Mischung aus 165 g Maleinsäureanhydrid, 330 g Butylacrylat, 253 g 2-Ethylhexylmethacrylat und 330 g Styrol wird in 3 Stunden und parallel dazu 31 g tert.-Butylperoktoat in 3,5 Stunden zudosiert.
   Nach 2 Stunden Nachrühren erhält man eine etwa 55%ige Lösung eines anhydridfunktionellen Copolymerisats mit einem Gehalt an Maleinsäureanhydrid von 15% und einem Molekulargewicht Mₙ von 4300.
b) Nach dem in Beispiel 1 b) beschriebenen Verfahren werden 34,7 g (1,1 Äquivalente) 1-Amino-2-propanol, 154 g Xylol und 500 g (1,0 Äquivalente) des in 27 a) beschriebenen anhydridfunktionellen Copolymerisats zur Reaktion gebracht. Man erhält das hydroxyfunktionelle Polyimidcopolymerisat 27) als etwa 47%ige klare Lösung, mit einer Gesamtsäurezahl von 8 (100%ig), einem berechneten Hydroxylgruppengehalt von ca. 2,3% (100%ig) und einem Anteil an der in Beispiel 4 b) beschriebenen Struktureinheit von ca. 21 Gew.-%.

### Beispiel 28

300 g (1,0 Äquivalente) des hydroxyfunktionellen Polyimidcopolymerisats 9), 29,1 g (1,0 Äquivalente) ε-Caprolacton und 0,2 g Dibutylzinndilaurat werden für 3 Stunden auf 120°C erhitzt. Man erhält das modifizierte Polyimidcopolymerisat 28), mit einem Hydroxylgruppengehalt von ca. 1,9 Gew.-% (100%ig) und einem Anteil von ca. 28% an folgender Struktureinheit: 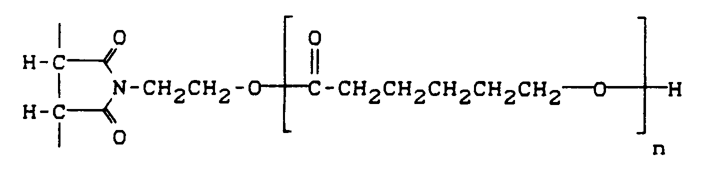
wobei n im statistischen Mittel gleich 1 ist.

### Beispiel 29

300 g (1,0 Äquivalente) des in Beispiel 2) beschriebenen hydroxyfunktionellen Polyimidcopolymerisats, 55,4 g ε-Caprolacton (2,0 Äquivalente) und 0,2 g Dibutylzinndilaurat werden bei 130°C für 3 Stunden gerührt. Man erhält das modifizierte Polyimidcopolymerisat 29), mit einem Hydroxylgruppengehalt von ca. 1,6 Gew.-% (100%ig) und einem Anteil an der in Beispiel 28) beschriebenen Struktureinheit von ca. 37 Gew.-%, wobei jedoch n im statistischen Mittel gleich 2 ist.

### Beispiel 30

Nach dem in Beispiel 1 b) beschriebenen Verfahren werden 400 g (1,0 Äquivalente) des in Beispiel 19 a) beschriebenen anhydridfunktionellen Copolymerisats, 115,5 g Xylol, 13,6 g 1-Amino-2-propanol (0,55 Äquivalente) und 16,2 g 2-Amino-2-methyl-2-propanol (0,55 Äquivalente) umsetzt. Man erhält das hydroxyfunktionelle Polyimidcopolymerisat 30) als klare, 42%ige Lösung. Die Gesamtsäurezahl beträgt 22 (100%ig), der berechnete Hydroxylgruppengehalt ist ca. 2,2% (100%ig). Das Copolymer enthält insgesamt 22 Gew.-% der Struktureinheit 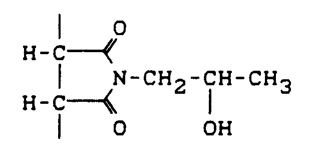
und der Struktureinheit

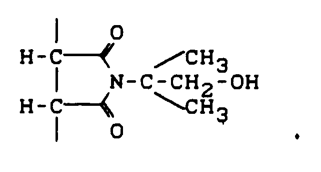

### Beispiel 31

a) In einem 2 l-Reaktionsgefäß mit Rühr-, Kühl- und Heizvorrichtung werden 990 g Xylol auf 120°C erhitzt. Eine Mischung aus 150 g Maleinsäureanhydrid, 575 g Methylmethacrylat, 50 g 2-Ethylhexylacrylat und 200 g Styrol wird in 3 Stunden und parallel dazu 35,7 g tert.-Butyl-peroctoat (70%ig) in 3,5 Stunden zudosiert. Nach 2 Stunden Nachrühren erhält man ein ca. 50%iges anhydridfunktionelles Copolymerisat, welches 15 Gew.-% (100%ig) Maleinsäureanhydrid enthält und ein Molekulargewicht Mₙ von 3100 hat.
b) Nach dem in Beispiel 1 b) beschriebenen Verfahren werden 25,7 g 1-Amino-2-propanol, 84 g Xylol und 400 g Vorstufe 31 a) zu einem hydroxyfunktionellen Polyimidcopolymerisat mit einer Gesamtsäurezahl von 9,5 (100%ig), einem Hydroxylgruppengehalt von ca. 2,3 % (100%ig) und einem Anteil von ca. 21 Gew.-% der im Beispiel 4 b) beschriebenen Struktureinheit umgesetzt, wobei das Produkt nach destillativer Abtrennung des Lösemittels und Trocknen bei 50°C als hellgelber Feststoff anfällt.

## Patentansprüche

1. Hydroxyfunktionelle Copolymerisate mit einer unter 25 liegenden Säurezahl des Molekulargewichtsbereichs Mₙ 2000 bis 30 000, dadurch gekennzeichnet, daß sie
a) 1 bis 70 Gew.-% an Struktureinheiten der Formel I 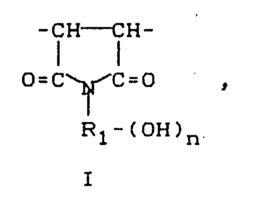
b) 1 bis 75 Gew.-% an Struktureinheiten der Formel II 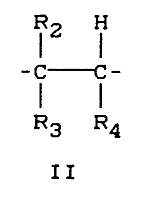 und
c) 15 bis 98 Gew.-% an Struktureinheiten der Formel III 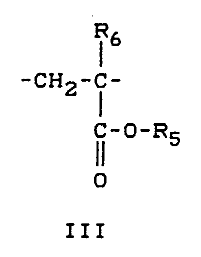
d) 0 bis 15, vorzugsweise 0 bis 5 Gew.-% an anderen, von eingebauten mehrfunktionellen Monomeren herrührenden Struktureinheiten
einpolymerisiert enthalten, wobei sich die genannten Prozentsätze zu 100 ergänzen und wobei
n für eine ganze Zahl von 1 bis 5 steht,
R₁ für einen (n+1)-wertigen Kohlenwasserstoffrest mit insgesamt 2 bis 20 Kohlenstoffatomen steht, der Sauerstoff und/oder Stickstoff in Form von in der Kette eingebauten oder seitenständig als Substituenten vorliegenden Ether-, Ester-, Amid-, tert.-Amin-, Urethan-, Keto-, Nitril- oder Nitrogruppen aufweisen und/oder Halogenatome als Substituenten enthalten kann,
R₂ für Wasserstoff, eine Methyl- oder Ethylgruppe oder für Chlor oder Fluor steht,
R₃ für einen aromatischen Kohlenwasserstoffrest mit 6 bis 12 Kohlenstoffatomen, Chlor, Fluor, eine Nitrilgruppe oder einen Sauerstoff und/oder Stickstoff in Form von Ether-, Ester-, Amid-, Urethan- oder Ketogruppen enthaltenden aliphatischen Kohlenwasserstoffrest mit 2 bis 18 Kohlenstoffatomen steht,
R₄ für Wasserstoff steht oder zusammen mit R₃ und den beiden Kohlenstoffatomen einen cycloaliphatischen Kohlenwasserstoffring mit 5 oder 6 Kohlenstoffatomen bildet,
R₅ für einen aliphatischen oder cycloaliphatischen, gegebenenfalls Sauerstoff oder Stickstoff als Heteroatome enthaltenden Kohlenwasserstoffrest mit 1 bis 18 Kohlenstoffatomen steht, und
R₆ für Wasserstoff oder eine Methylgruppe steht.

2. Hydroxyfunktionelle Copolymerisate gemäß Anspruch 1, dadurch gekennzeichnet, daß
n für eine ganze Zahl von 1 bis 3 steht,
R₁ für einen aliphatischen, gegebenenfalls Estergruppen aufweisenden Kohlenwasserstoffrest mit insgesamt 2 bis 13 Kohlenstoffatomen steht,
R₂ für Wasserstoff, eine Methyl- oder Ethylgruppe oder für Chlor steht,
R₃ für einen Phenylrest,
R₄ für Wasserstoff,
R₅ für einen aliphatischen Kohlenwasserstoffrest mit 1 bis 18 Kohlenstoffatomen und
R₆ für Wasserstoff oder eine Methylgruppe steht.

3. Hydroxyfunktionelle Copolymerisate gemäß Anspruch 1 und 2, dadurch gekennzeichnet, daß sie einen Gehalt an Hydroxylgruppen von 0,5 bis 8 Gew.-% aufweisen.

4. Hydroxyfunktionelle Copolymerisate gemäß Anspruch 1 bis 3, dadurch gekennzeichnet, daß sie ein Molekulargewicht Mₙ von 2600 bis 8000 aufweisen und
a) 5 bis 55 Gew.-% Struktureinheiten der Formel I,
b) 3 bis 60 Gew.-% Struktureinheiten der Formel II und
c) 25 bis 85 Gew.-% Struktureinheiten der Formel III aufweisen,
wobei sich die genannten Prozentsätze zu 100 ergänzen und wobei n, R₁, R₂, R₃, R₄, R₅ und R₆ die in Anspruch 2 genannte Bedeutung haben.

5. Verfahren zur Herstellung von hydroxyfunktionellen Copolymerisaten gemäß Anspruch 1, dadurch gekennzeichnet, daß man den hydroxyfunktionellen Copolymerisaten entsprechende anhydridfunktionelle Copolymerisate mit Aminoalkoholen der allgemeinen Formel IV
H₂N-R₁-(OH)ₙ IV
für welche
n und R₁ die in Anspruch 1 genannte Bedeutung haben,
unter Einhaltung eines Äqivalentverhältnisses von Aminogruppen zu Säureanhydridgruppen von 1,0 bis 2,0 : 1 unter Imidbildung bei 100 bis 200°C zur Reaktion bringt und gleichzeitig und/oder anschließend das Reaktionswasser azeotrop abdestilliert.

6. Verfahren gemäß Anspruch 5, dadurch gekennzeichnet, daß man Aminoalkohole mit einem Molekulargewicht von mindestens 61 zusammen mit Lösungsmittel vorlegt, auf Temperaturen von mindestens 100°C erhitzt, das gelöste anhydridfunktionelle Copolymerisat zudosiert und das Reaktionswasser gleichzeitig oder anschließend abdestilliert, bis das Verfahrensprodukt eine maximale Säurezahl von 25 aufweist.

7. Verfahren gemäß Anspruch 5 und 6, dadurch gekennzeichnet, daß man als Aminoalkohol 2-Amino-1-ethanol, 2-Amino-1-propanol, 3-Amino-1-propanol, 1-Amino-2-propanol, die isomeren Aminobutanole oder die isomeren Propandiole verwendet.

8. Weitere Ausbildung der Verfahren gemäß Anspruch 5 bis 7, dadurch gekennzeichnet, daß man die durch Umsetzung der anhydridfunktionellen Copolymerisate mit den Aminoalkoholen erhaltenen hydroxyfunktionellen Copolymerisate durch Umsetzung mit 0,05 bis 5 Mol an Lactonen pro Mol an in den Copolymerisaten vorliegenden Hydroxylgruppen unter ringöffnender Esterbildung modifiziert.

9. Verwendung der hydroxyfunktionellen Copolymerisate gemäß Anspruch 1 bis 4 als Bindemittel oder Bindemittelkomponente für Lacke, Beschichtungen, Dichtmassen, Klebstoffe oder Druckfarben.

## Claims

1. Hydroxyfunctional copolymers with an acid value below 25 and a molecular weight range Mₙ from 2,000 to 30,000, characterized in that they contain
a) 1 to 70% by weight of structural units corresponding to formula I: 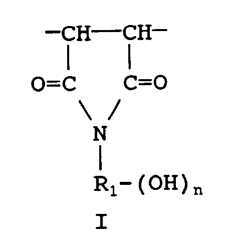
b) 1 to 75% by weight of structural units corresponding to formula II: 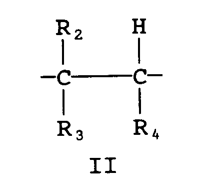 and
c) 15 to 98% by weight of structural units corresponding to formula III: 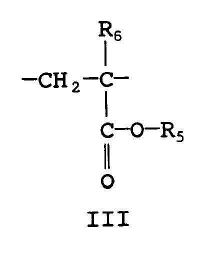
d) 0 to 15 and preferably 0 to 5% by weight of other structural units emanating from incorporated polyfunctional monomers
in copolymerized form, the percentages mentioned adding up to 100 and
n being a number of 1 to 5,
R₁ being an (n+1)-functional hydrocarbon radical with a total of 2 to 20 carbon atoms which may contain oxygen and/or nitrogen in the form of ether, ester, amide, tert.amine, urethane, keto, nitrile or nitro groups incorporated in the chain or positioned laterally at substituents and/or halogen atoms as substituents,
R₂ being hydrogen, a methyl or ethyl group or chlorine or fluorine,
R₃ being an aromatic hydrocarbon radical containing 6 to 12 carbon atoms, chlorine, fluorine, a nitrile group or a C₂₋₁₈ hydrocarbon radical containing oxygen and/or nitrogen in the form of ether, ester, amide, urethane or keto groups,
R₄ being hydrogen or, together with R₃ and the two carbon atoms, forming a cycloaliphatic hydrocarbon ring with 5 or 6 carbon atoms,
R₅ being an aliphatic or cycloaliphatic C₁₋₁₈ hydrocarbon radical optionally containing oxygen or nitrogen as heteroatoms and
R₆ being hydrogen or a methyl group.

2. Hydroxyfunctional copolymers as claimed in claim 1, characterized in that
n is an integer of 1 to 3,
R₁ is an aliphatic C₂₋₁₃ hydrocarbon radical optionally containing ether groups,
R₂ is hydrogen, a methyl or ethyl group or chlorine,
R₃ is a phenyl radical,
R₄ is hydrogen,
R₅ is an aliphatic hydrocarbon radical containing 1 to 18 carbon atoms and
R₆ is hydrogen or a methyl group.

3. Hydroxyfunctional copolymers as claimed in claims 1 and 2, characterized in that they have a content of hydroxyl groups of 0.5 to 8% by weight.

4. Hydroxyfunctional copolymers as claimed in claims 1 to 3, characterized in that they have a molecular weight Mₙ of 2,600 to 8,000 and contain
a) 5 to 55% by weight of structural units corresponding to formula I,
b) 3 to 60% by weight of structural units corresponding to formula II and
c) 25 to 85% by weight of structural units corresponding to formula III,
the percentages mentioned adding up to 100 and n, R₁, R₂, R₃, R₄, R₅ and R₆ having the meanings defined in claim 2.

5. A process for the production of the hydroxyfunctional copolymers claimed in claim 1, characterized in that anhydride-functional copolymers corresponding to the hydroxyfunctional copolymers are reacted with aminoalcohols corresponding to general formula IV:
H₂N-R₁-(OH)ₙ IV
in which
n and R₁ are as defined in claim 1,
at 100 to 200°C with imide formation, an equivalent ratio of amino groups to anhydride groups of 1.0 to 2.0:1 being maintained during the reaction, and the water of reaction is simultaneously and/or subsequently removed by azeotropic distillation.

6. A process as claimed in claim 5, characterized in that aminoalcohols with a molecular weight of at least 61 are introduced first together with solvent and heated to temperatures of at least 100°C, the dissolved anhydride-functional copolymer is then added and the water of reaction is simultaneously or subsequently removed by distillation until the end product has a maximum acid value of 25.

7. A process as claimed in claims 5 and 6, characterized in that 2-amino-1-ethanol, 2-amino-1-propanol, 3-amino-1-propanol, 1-amino-2-propanol, isomeric aminobutanols or isomeric propanediols are used as the aminoalcohol.

8. A further development of the process claimed in claims 5 to 7, characterized in that the hydroxyfunctional copolymers obtained by reaction of the anhydride-functional copolymers with the aminoalcohols are modified by reaction with 0.05 to 5 mol of lactones per mol of hydroxyl groups present in the copolymers in a ring-opening esterification reaction.

9. The use of the hydroxyfunctional copolymers claimed in claims 1 to 4 as binders or as a binder component for lacquers, coatings, sealing compounds, adhesives or printing inks.

## Revendications

1. Copolymères porteurs de groupes hydroxy, d'indice d'acide inferieur à 25 et de poids moléculaire Mₙ compris dans la plage de 2000 à 30 000, caractérisés en ce qu'ils contiennent, incorporés par polymérisation
a) 1 à 70 % en poids de motifs structuraux de formule I 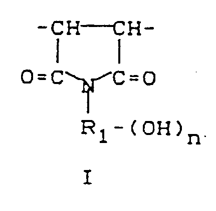
b) 1 à 75 % en poids de motifs structuraux de formule II 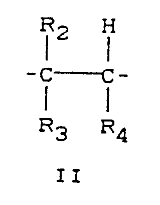 et
c) 15 à 98 % en poids de motifs structuraux de formule III 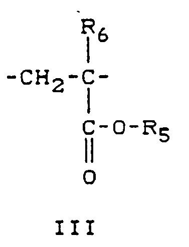
d) 0 à 15, de préférence 0 à 5 % en poids d'autres motifs structuraux incorporés provenant de monomères multifonctionnels,
le total des pourcentages en poids mentionnés étant égal à 100, et
n est un nombre entier de 1 à 5,
R₁ représente un reste hydrocarboné de valence (n+1) ayant au total 2 à 20 atomes de carbone, qui peut présenter de l'oxygène et/ou de l'azote sous forme de groupes éther, ester, amide, tertio-amine, uréthanne, céto, nitrile ou nitro incorporés à la chaîne ou présents latéralement comme substituants et/ou qui peut contenir des atomes d'halogènes comme substituants,
R₂ représente de l'hydrogène, un groupe méthyle ou éthyle ou bien du chlore ou du fluor,
R₃ est un reste d'hydrocarbure aromatique ayant 6 à 12 atomes de carbone, du chlore, du fluor, un groupe nitrile ou un reste d'hydrocarbure aliphatique de 2 à 18 atomes de carbone contenant de l'oxygène et/ou de l'azote sous forme de groupes éther, ester, amide, uréthanne ou céto,
R₄ est de l'hydrogène ou forme conjointement avec R₃ et les deux atomes de carbone un noyau d'hydrocarbure cycloaliphatique ayant 5 ou 6 atomes de carbone,
R₅ est un reste hydrocarboné aliphatique ou cycloaliphatique contenant éventuellement de l'oxygène ou de l'azote comme hétéro-atomes et ayant 1 à 18 atomes de carbone, et
R₆ est de l'hydrogène ou un groupe méthyle.

2. Copolymères porteurs de groupes hydroxy suivant la revendication 1, caractérisés en ce que
n est un nombre entier de 1 à 3,
R₁ est un reste d'hydrocarbure aliphatique portant éventuellement des groupes ester, avec un total de 2 à 13 atomes de carbone,
R₂ représente de l'hydrogène, un groupe méthyle ou éthyle ou du chlore,
R₃ est un reste phényle,
R₄ est de l'hydrogène,
R₅ est un reste d'hydrocarbure aliphatigue ayant 1 à 18 atomes de carbone et
R₆ est de l'hydrogène ou un groupe méthyle.

3. Copolymères porteurs de groupes hydroxy suivant les revendications 1 et 2, caractérisés en ce qu'ils présentent une teneur en groupes hydroxyle de 0,5 à 8 % en poids.

4. Copolymères porteurs de groupes hydroxy suivant les revendications 1 à 3, caractérisés en ce qu'ils présentent un poids moléculaire Mₙ de 2600 à 8000 et
a) 5 à 55 % en poids de motifs structuraux de formule I,
b) 3 à 60 % en poids de motifs structuraux de formule II et
c) 25 à 85 % en poids de motifs structuraux de formule III,
le total des pourcentages mentionnés étant égal à 100 et n, R₁, R₂, R₃, R₄, R₅ et R₆ ayant la définition mentionnée dans la revendication 2.

5. Procédé de production de copolymères porteurs de groupes hydroxy suivant la revendication 1, caractérisé en ce qu'on fait réagir des copolymères à fonction anhydride correspondant aux copolymères porteurs de groupes hydroxy avec des amino-alcools de formule générale IV
H₂N-R₁-(OH)ₙ IV
dans laquelle
n et R₁ ont la définition indiquée dans la revendication 1,
en maintenant un rapport d'équivalents des groupes amino aux groupes anhydride d'acide de 1,0 à 2,0 : 1, avec formation d'un imide à une température de 100 à 200°C et on chasse en même temps et/ou ensuite l'eau de réaction par distillation azéotropique.

6. Procédé suivant la revendication 5, caractérisé en ce qu'on charge préalablement des amino-alcools de poids moléculaire au moins égal à 61 conjointement avec le solvant, on chauffe le mélange à des températures d'au moins 100°C, on ajoute le copolymère à fonctionnalité anhydride dissous et on chasse en même temps ou ensuite l'eau de réaction par distillation jusqu'à ce que le produit du procédé présente un indice d'acide maximal de 25.

7. Procédé suivant les revendications 5 et 6, caractérisé en ce qu'on utilise comme amino-alcool le 2-amino-1-éthanol, le 2-amino-1-propanol, le 3-amino-1-propanol, le 1-amino-2-propanol, les amino-butanols isomères ou les propanediols isomères.

8. Variante des procédés suivant les revendications 5 à 7, caractérisée en ce qu'on modifie les copolymères porteurs de groupes hydroxy obtenus par réaction des copolymères à fonctionnalité anhydride avec les amino-alcools en les faisant réagir avec 0,05 à 5 moles de lactones par mole de groupes hydroxyle présents dans les copolymères, avec formation d'ester par ouverture du noyau.

9. Utilisation des copolymères porteurs de groupes hydroxy suivant les revendications 1 à 4 comme liant ou comme composant de liant pour des peintures, des compositions de revêtements, des compositions d'étanchéité, des adhésifs ou des encres d'imprimerie.
